# EUROPEAN PATENT APPLICATION

(11) **EP 4 796 498 A1**
(43) Date of publication of application: **26.08.2026**
(21) Application number: 25757922.7
(22) Date of filing: 17.02.2025
(51) Int. Cl.: C01B 32/164

(54) **CARBON NANOTUBE COLLECTION DEVICE, CARBON NANOTUBE MANUFACTURING DEVICE, AND CARBONE NANOTUBE COLLECTION METHOD**

(30) Priority: 22.02.2024 JP 2024025374
(71) Applicant: Dowa Thermotech Co., Ltd., Chiyoda-ku Tokyo 101-0021 (JP); Meijo Nano Carbon Co., Ltd., Nagoya-shi, Aichi 463-0018 (JP)
(72) Inventor: FUJITA, Takahiro, Tokyo 101-0021 (JP); HASHIMOTO, Takeshi, Nagoya-shi, Aichi 463-0018 (JP); TAKANO, Kei, Nagoya-shi, Aichi 463-0018 (JP)
(74) Representative: Müller-Boré & Partner Patentanwälte PartG mbB
(86) International application number: PCT/JP2025/005145
(87) International publication number: WO 2025/177985

(57) **Abstract**

A carbon nanotube collection apparatus for collecting carbon nanotubes produced by a carbon nanotube production apparatus, includes: a collection chamber configured to collect the carbon nanotubes into a collection basket; a carry-in chamber configured to carry an empty collection basket into the collection chamber; and a carry-out chamber configured to carry out the collection basket that has collected the carbon nanotubes from the collection chamber; and further includes an entry-side door configured to seal between the collection chamber and the carry-in chamber; and an exit-side door configured to seal between the collection chamber and the carry-out chamber.

## Description

### TECHNICAL FIELD

The present invention relates to a carbon nanotube collection apparatus for collecting carbon nanotubes, a carbon nanotube manufacturing apparatus having the carbon nanotube collection apparatus, and a carbon nanotube collection method.

### BACKGROUND ART

Carbon nanotubes are highly promising new materials in many fields due to their excellent properties such as electrical conductivity, thermal conductivity, and mechanical strength. As a manufacturing apparatus for carbon nanotubes, Patent Document 1 discloses a known manufacturing apparatus that uses a chemical vapor deposition method (CVD method) in which a raw material containing carbon (a carbon source) is thermally decomposed to produce carbon nanotubes.

Further, Patent Document 2 discloses providing a carbon nanotube collection apparatus in or near a collection part of a reaction furnace that produces carbon nanotubes by the CVD method. The collection apparatus described in Patent Document 2 collects carbon nanotubes by rotating a winding member to wind the carbon nanotubes into a roll shape, forming a wound body, and taking out the wound body from the takeout port provided in the collection part.

### PRIOR ART DOCUMENT

### PATENT DOCUMENT

Patent Document 1: Japanese Laid-open Patent Publication No. 2019-064918
Patent Document 2: Japanese Laid-open Patent Publication No. 2004-190166

### SUMMARY OF THE INVENTION

### PROBLEMS TO BE SOLVED BY THE INVENTION

In the collection apparatus for fine carbon fibers described in Patent Document 2, the winding member is provided in or near the collection part of the reaction furnace using the chemical vapor deposition method. The winding member rotates to wind the fine carbon fibers into a roll, forming a fine carbon fiber wound body, which is then collected as the fine carbon fiber wound body. When the fine carbon fiber wound body reaches a predetermined diameter, it is taken out through the takeout port provided in the collection part. Consequently, each time one fine carbon fiber wound body is manufactured, it is required to stop the fine carbon fiber production apparatus and lower the temperature of the reaction furnace and the collection part to room temperature to collect the manufactured wound body. Furthermore, when restarting the production of fine carbon fibers, the atmospheric temperature within the reaction furnace must be raised to a temperature suitable for producing fine carbon fibers.

That is, in the fine carbon fiber collection apparatus described in Patent Document 2, it is necessary to lower and raise the temperature of the reaction furnace again every time the fine carbon fibers are collected, which results in a prolonged period during which the fine carbon fibers cannot be produced in the reaction furnace. For this reason, a significant amount of time had been required for the mass manufacturing of fine carbon fibers.

The present invention has been made in light of the foregoing issues, and an object thereof is to provide a carbon nanotube collection apparatus, a carbon nanotube manufacturing apparatus, and a carbon nanotube collection method, with the aim of improving the operation efficiency of mass manufacturing of carbon nanotubes.

### MEANS FOR SOLVING THE PROBLEMS

One aspect of the present invention for solving the above problem is a carbon nanotube collection apparatus that collects carbon nanotubes produced by a carbon nanotube production apparatus, the carbon nanotube collection apparatus including: a collection chamber configured to collect carbon nanotubes into a collection basket; a carry-in chamber configured to carry an empty collection basket into the collection chamber; and a carry-out chamber configured to carry the collection basket that has collected the carbon nanotubes out of the collection chamber; an entry-side door configured to seal between the collection chamber and the carry-in chamber; and an exit-side door configured to seal between the collection chamber and the carry-out chamber.

In this carbon nanotube collection apparatus, the carry-out chamber may be provided with a compression mechanism configured to compress the carbon nanotubes collected in the collection basket. In addition, the carbon nanotube collection apparatus may further include a collection basket circulation mechanism configured to take out the carbon nanotubes from the collection basket that has collected the carbon nanotubes and been carried out of the carry-out chamber, and to carry the empty collection basket into the carry-in chamber. Moreover, the carbon nanotube collection apparatus may further include a transport mechanism configured to transport the collection basket among the collection chamber, the carry-in chamber, the carry-out chamber, and the circulation mechanism.

Another aspect of the present invention from a different perspective is a carbon nanotube collection apparatus that collects carbon nanotubes produced by a carbon nanotube production apparatus, the carbon nanotube collection apparatus including: a collection chamber configured to collect carbon nanotubes into a collection basket; a carry-in/out chamber configured to carry an empty collection basket into the collection chamber and to carry the collection basket that has collected the carbon nanotubes out of the collection chamber; an entry/exit-side door configured to seal between the collection chamber and the carry-in/out chamber.

In this carbon nanotube collection apparatus, the carry-in/out chamber may be provided with a compression mechanism configured to compress the carbon nanotubes collected in the collection basket. In addition, the carbon nanotube collection apparatus may further include a collection basket circulation mechanism configured to take out the carbon nanotubes from the collection basket that has collected the carbon nanotubes and been carried out of the carry-in/out chamber, and to carry the empty collection basket into the carry-in/out chamber. Furthermore, the carbon nanotube collection apparatus may include a transport mechanism configured to transport the collection basket among the collection chamber, the carry-in/out chamber, and the circulation mechanism.

Another aspect of the present invention from a different perspective includes a production apparatus configured to produce carbon nanotubes and the carbon nanotube collection apparatus described above.

Another aspect of the present invention from a different perspective is a carbon nanotube collection method for collecting carbon nanotubes using the carbon nanotube collection apparatus described above, the method including repeatedly performing: an operation of collecting carbon nanotubes into a collection basket in the collection chamber; and an operation of compressing the carbon nanotubes collected in the collection basket in the carry-out chamber.

Another aspect of the present invention from a different perspective is a carbon nanotube collection method for collecting carbon nanotubes using the carbon nanotube collection apparatus described above, the method including repeatedly performing an operation of collecting carbon nanotubes into a collection basket in the collection chamber; and an operation of compressing the carbon nanotubes collected in the collection basket in the carry-in/out chamber.

### EFFECT OF THE INVENTION

According to the present invention, it is possible to provide a carbon nanotube collection apparatus, a carbon nanotube manufacturing apparatus, and a carbon nanotube collection method capable of improving the operation efficiency of mass manufacturing of carbon nanotubes.

### BRIEF DESCRIPTION OF THE DRAWINGS

FIG. 1 is a front view illustrating a schematic configuration of a carbon nanotube manufacturing apparatus according to a first embodiment.
FIG. 2 is a plan view illustrating the schematic configuration of the carbon nanotube manufacturing apparatus according to the first embodiment.
FIG. 3 is an explanatory diagram for explaining a winding structure for carbon nanotubes.
FIG. 4 is an explanatory diagram illustrating a state in which a winding member has moved to a pull-out position.
FIG. 5 is a front view illustrating a schematic configuration of a carbon nanotube manufacturing apparatus according to a second embodiment.
FIG. 6 is a plan view illustrating the schematic configuration of the carbon nanotube manufacturing apparatus according to the second embodiment.

### EMBODIMENTS FOR CARRYING OUT INVENTION

Embodiments of the present invention will be described below with reference to the drawings. In the present specification and drawings, elements having substantially the same functional configuration are denoted by the same codes to omit redundant descriptions. Note that carbon nanotubes (CNTs) in the present specification are tubular carbon allotropes (typically, cylindrical structures with a graphite structure) and include so-called single-walled CNTs, multi-walled CNTs, or carbon nanohorns with horn-shaped tube tips.

### (First Embodiment)

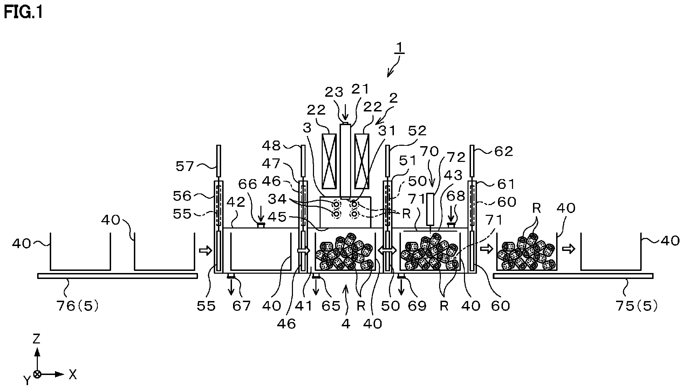

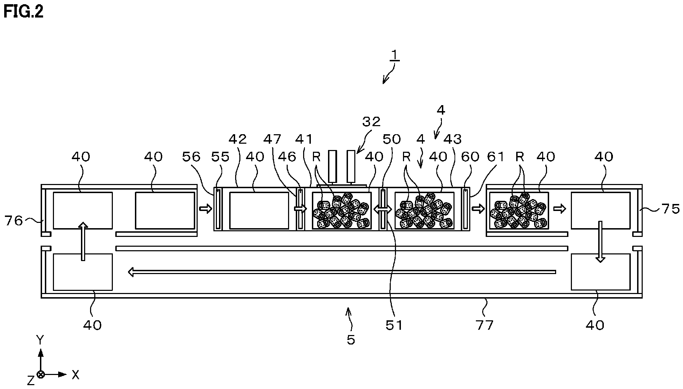

As illustrated in FIGS. 1 and 2, a CNT manufacturing apparatus 1 according to a first embodiment includes a production apparatus 2 for producing CNTs, a winding chamber 3 disposed below the CNT production apparatus 2 for winding CNTs produced by the production apparatus 2, and a collection apparatus 4 for collecting a CNT wound body R wound in the winding chamber 3. Note that "X direction" in the figures is a depth direction of the CNT manufacturing apparatus 1 (a transport direction of a collection basket 40), "Y direction" is a width direction of the CNT manufacturing apparatus 1, and "Z direction" is a height direction of the CNT manufacturing apparatus 1. The directions X to Z are perpendicular to each other.

### <Carbon Nanotube Production Apparatus>

An apparatus configuration of the production apparatus 2 is not particularly limited as long as it can produce CNTs. Therefore, as the production apparatus 2, for example, an apparatus using a chemical vapor deposition method (that is, CVD method) that produces CNTs by thermally decomposing raw material gas containing carbon, as in Patent Document 1 and Patent Document 2, can be applied.

The production apparatus 2 illustrated in FIGS. 1 and 2 includes a reaction furnace 21, a heater 22 provided at a side of the reaction furnace 21, and a raw material supply port 23 for supplying a raw material for producing CNTs to the reaction furnace 21.

The shape of the reaction furnace 21 is not limited, but for example, it is preferably straight tubular (that is, a shape in which an axis extends linearly). Further, a cross-sectional shape of the reaction furnace 21 may be a rounded shape such as a circle, an ellipse, an oval, or an oblong, or may be a polygonal shape.

The shape and heating method of the heater 22 are not particularly limited as long as the reaction furnace 21 can be heated to a temperature suitable for producing CNTs. The heater 22 only needs to be able to heat the reaction furnace 21 to, for example, 500°C to 2000°C, preferably 1000°C to 1600°C. Concrete examples of the heater 22 include a tungsten heater capable of heating the reaction furnace 21 to 500°C to 2000°C or a silicon carbide heater (SiC heater) capable of heating it to 600 to 1600°C.

Carrier gas (for example, hydrogen gas) is also supplied to the raw material supply port 23 together with raw material gas such as a carbon source, a catalyst metal, or a catalyst metal compound.

### <Winding Chamber for Carbon Nanotubes>

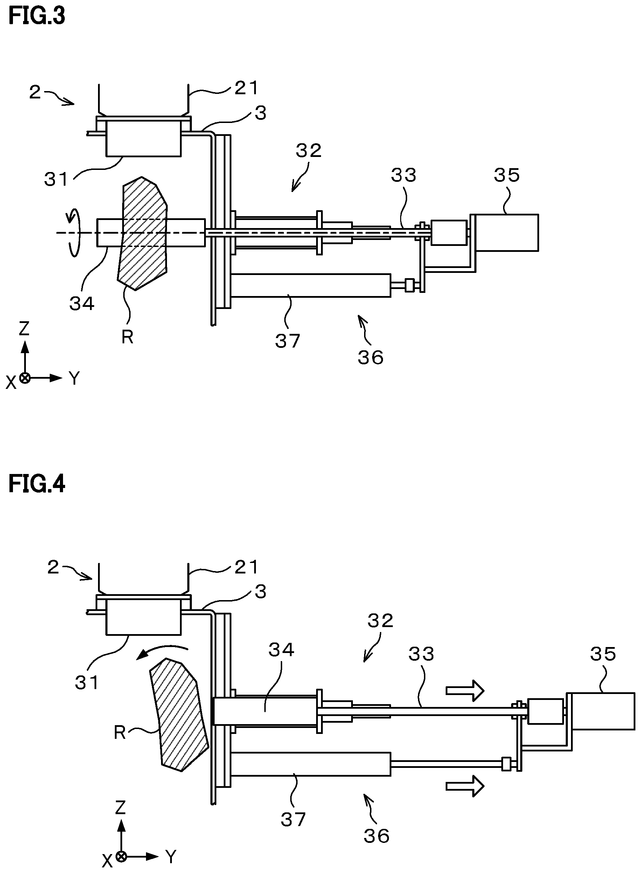

As illustrated in FIGS. 3 and 4, an opening portion 31 communicating with the lower end of the reaction furnace 21 of the production apparatus 2 is provided in the top surface portion of the winding chamber 3. The CNTs produced in the reaction furnace 21 are transported into the winding chamber 3 through the opening portion 31 together with the carrier gas.

A winding mechanism 32 for winding CNTs is provided on the side surface portion of the winding chamber 3. The winding mechanism 32 includes a rotation shaft 33, a winding member 34, and a driver 35.

The rotation shaft 33 is, for example, a cylindrical or column-shaped member, and is disposed such that its rotation direction is oriented in a horizontal direction (the X direction in this embodiment). This rotation shaft 33 is provided to penetrate the side surface portion of the winding chamber 3, and a part of the rotation shaft 33 protrudes into the winding chamber 3.

The winding member 34 is a member extending in an axial direction of the rotation shaft 33, and is formed by, for example, a cylindrical or columnar roller. The base end of the winding member 34 is attached to the tip end (the end portion on the winding chamber 3 side) of the rotation shaft 33. Note that the installation position of the winding member 34 is not particularly limited, as long as it is positioned to contact the CNTs that have passed through the opening portion 31.

The driver 35 is provided outside the winding chamber 3. As the driver 35, for example, a motor or the like is used. The rotation shaft 33 to which the winding member 34 is attached is connected to the driver 35, and the rotation of the rotation shaft 33 by the driver 35 causes the winding member 34 to rotate integrally with the rotation shaft 33. A rotation speed of the rotation shaft 33 is appropriately set according to a production speed of CNTs or a desired size of the CNT wound body R, and is set to, for example, 0.01 to 500 rpm.

A separation mechanism 36 for separating the CNT wound body R formed on the winding member 34 is also provided outside the winding chamber 3. The separation mechanism 36 is a mechanism that moves the rotation shaft 33, the winding member 34, and the driver 35 in a direction from the inside to the outside of the winding chamber 3. In other words, the separation mechanism 36 is a mechanism that moves the winding member 34 in a direction to be pulled out from the winding chamber 3, and this separation mechanism 36 can move the rotation shaft 33 and the winding member 34 from the tip end side toward the base end side of the winding member 34.

In this embodiment, a cylinder mechanism 37 is provided outside the winding chamber 3 as an example of the separation mechanism 36. The winding member 34 moves, by the expansion and contraction operation of the cylinder mechanism 37, between a position for winding CNTs illustrated in FIG. 3 (winding position) and a position for separating the CNT wound body R from the winding member 34 illustrated in FIG. 4 (pull-out position). That is, the winding member 34 is movable in a direction approaching or separating from the side surface portion of the winding chamber 3.

In the collection apparatus 4 having the separation mechanism 36 described above, after the CNT wound body R is formed by the winding member 34 at the winding position, the winding member 34 is retracted to the pull-out position, whereby the CNT wound body R comes into contact with an inner surface of the side wall of the winding chamber 3. In this state, the inner peripheral surface of the CNT wound body R is no longer supported by the winding member 34 by further retracting the winding member 34. As a result, the CNT wound body R detaches from the winding member 34, and the CNT wound body R and the winding member 34 are separated. Thereafter, the winding member 34 advances from the pull-out position to the winding position, and winding of CNTs for forming the next CNT wound body R begins.

Furthermore, in the CNT manufacturing apparatus 1, it is not essential to provide a CNT winding structure. When the winding structure is not provided, the CNT manufacturing apparatus 1 is configured by directly connecting the collection apparatus 4, which will be described later, to a lower end portion of the production apparatus 2, for example.

### <Carbon Nanotube Collection Apparatus>

As illustrated in FIGS. 1 and 2, the collection apparatus 4 includes a collection chamber 41 for collecting carbon nanotubes in the form of the CNT wound body R into the collection basket 40, a carry-in chamber 42 for carrying the empty collection basket 40 into the collection chamber 41, and a carry-out chamber 43 for carrying out the collection basket 40 containing the CNT wound body R (carbon nanotubes) collected in the collection chamber 41.

The collection basket 40 is a mesh-shaped basket in which a plurality of opening portions capable of storing the CNT wound bodies R are formed and is capable of being housed in each of the collection chamber 41, the carry-in chamber 42, and the carry-out chamber 43. The material of the collection basket 40 is not particularly limited as long as it has heat resistance to the heat possessed by the CNT wound bodies R that have fallen into the collection basket 40, but for example, a metal material may be used.

An opening portion 45 communicating with the winding chamber 3 is provided in the top surface portion of the collection chamber 41. The opening portion 45 has the shape through which the CNT wound body R formed in the winding chamber 3 can pass. As described above, since the winding chamber 3 communicates with the reaction furnace 21 of the production apparatus 2 via the opening portion 31, the opening portion 45 of the collection chamber 41 communicating with the winding chamber 3 can therefore be considered the opening portion communicating with the production apparatus 2.

An entry-side door 46 configured to seal between the two chambers is provided between the collection chamber 41 and the carry-in chamber 42. The entry-side door 46 is housed within a casing 47 to be vertically movable and is configured to be raised and lowered within the casing 47 by a raising and lowering mechanism 48, such as a cylinder device, provided above the casing 47. When the entry-side door 46 is lowered due to the extension operation of the raising and lowering mechanism 48, as shown in FIG. 1 by the solid line, the atmosphere between the collection chamber 41 and the carry-in chamber 42 is sealed off. On the other hand, when the entry-side door 46 is raised due to the contraction operation of the raising and lowering mechanism 48, as shown in FIG. 1 by the dash-dotted line, the collection chamber 41 and the carry-in chamber 42 are in a communicating state.

Similarly, an exit-side door 50 for sealing between the two chambers is provided between the collection chamber 41 and the carry-out chamber 43. The exit-side door 50 is housed within a casing 51 to be vertically movable and is configured to be raised and lowered within the casing 51 by a raising and lowering mechanism 52, such as a cylinder device, provided above the casing 51. When the exit-side door 50 is lowered due to the extension operation of the raising and lowering mechanism 52, as shown in FIG. 1 by the solid line, the atmosphere between the collection chamber 41 and the carry-out chamber 43 is sealed off. On the other hand, when the exit-side door 50 is raised due to the contraction operation of the raising and lowering mechanism 52, as shown in FIG. 1 by the dash-dotted line, the collection chamber 41 and the carry-out chamber 43 are in a communicating state.

In addition, in the carry-in chamber 42, an inlet door 55 for sealing between the outside and the carry-in chamber 42 is provided on the side surface opposite the collection chamber 41. The inlet door 55 is housed within a casing 56 to be vertically movable and is configured to be raised and lowered within the casing 56 by a raising and lowering mechanism 57, such as a cylinder device, provided above the casing 56. When the inlet door 55 is lowered due to the extension operation of the raising and lowering mechanism 57, as shown in FIG. 1 by the solid line, the atmosphere between the outside and the carry-in chamber 42 is sealed off. On the other hand, when the inlet door 55 is raised due to the contraction operation of the raising and lowering mechanism 57, as shown in FIG. 1 by the dash-dotted line, the outside and the carry-in chamber 42 are in a communicating state.

Similarly, in the carry-out chamber 43, an outlet door 60 for sealing between the outside and the carry-out chamber 43 is provided on the side surface opposite the collection chamber 41. The outlet door 60 is housed within a casing 61 to be vertically movable and is configured to be raised and lowered within the casing 61 by a raising and lowering mechanism 62, such as a cylinder device, provided above the casing 61. When the outlet door 60 is lowered due to the extension operation of the raising and lowering mechanism 62, as shown in FIG. 1 by the solid line, the atmosphere between the outside and the carry-out chamber 43 is sealed off. On the other hand, when the outlet door 60 is raised due to the contraction operation of the raising and lowering mechanism 62, as shown in FIG. 1 by the dash-dotted line, the outside and the carry-out chamber 43 are in a communicating state.

An exhaust port 65 for exhausting the atmosphere in the collection chamber 41 is provided in the bottom portion of the collection chamber 41. Gas supplied into the collection chamber 41 from the reaction furnace 21 and the winding chamber 3 is exhausted through the exhaust port 65. By using the above-mentioned mesh-shaped collection basket 40, the CNTs that have fallen without being wound by the winding member 34 can be collected from the gas exhausted from the exhaust port 65 of the collection chamber 41, resulting in improved exhaust gas cleanliness, enabling an environmentally conscious operation.

A supply port 66 for purge gas such as incombustible gas is provided in the upper portion of the carry-in chamber 42. An exhaust port 67 for exhausting the atmosphere in the carry-in chamber 42 is provided in the bottom portion of the carry-in chamber 42. By supplying the purge gas into the carry-in chamber 42 from the supply port 66 and exhausting the gas from the exhaust port 67, the inside of the carry-in chamber 42 can be maintained in an inert atmosphere.

Similarly, a supply port 68 for purge gas such as incombustible gas is provided in the upper portion of the carry-out chamber 43. An exhaust port 69 for exhausting the atmosphere in the carry-out chamber 43 is provided in the bottom portion of the carry-out chamber 43. By supplying the purge gas into the carry-out chamber 43 from the supply port 68 and exhausting the gas from the exhaust port 69, the atmosphere inside the carry-out chamber 43 is maintained in an inert atmosphere.

The carry-out chamber 43 is provided with a compression mechanism 70 for compressing CNTs. The compression mechanism 70 includes a pressing plate 71 serving as a pressing member and a driver 72 connected to the pressing plate 71.

The pressing plate 71 has a size capable of being inserted into the collection basket 40 and is configured to be raised and lowered by the driver 72. In other words, within the carry-out chamber 43, the pressing plate 71 is capable of moving up and down between a position where the pressing plate 71 descends into the collection basket 40 to compress the CNT wound bodies R (descended position), and a position where the pressing plate 71 moves above the collection basket 40 (withdrawn position), as shown in FIG. 1 by the dash-dotted line.

The collection apparatus 4 includes a collection basket circulation mechanism 5 for taking out the CNT wound bodies R from the collection basket 40 that has collected the CNT wound bodies R and been carried out of the carry-out chamber 43, and carrying the empty collection basket 40 into the carry-in chamber 42. The collection basket circulation mechanism 5 includes a carry-out side stage 75 positioned adjacent to the carry-out chamber 43, a carry-in side stage 76 positioned adjacent to the carry-in chamber 42, and a transport path 77 for transporting the collection basket 40 from the carry-out side stage 75 to the carry-in side stage 76. In the collection basket circulation mechanism 5, the CNT wound body R is taken out from the collection basket 40 at the carry-out side stage 75, and subsequently, the empty collection basket 40 is transferred to the transport path 77. Furthermore, the collection basket 40 is passed to the carry-in side stage 76 via the transport path 77.

The CNT manufacturing apparatus 1 according to this embodiment is configured as described above. Incidentally, the material of each member constituting the CNT manufacturing apparatus 1 is not particularly limited as long as the material does not inhibit the exertion of the functions and effects described in this specification; however, for example, stainless steel or rolled steel for general structure (SS material) is employed. Further, among the members constituting the CNT manufacturing apparatus 1, members with which the CNTs may come into contact may be provided with a Teflon (registered trademark) coating.

### (Carbon Nanotube Collection Method)

Next, an example of a CNT collection method using the collection apparatus 4 will be described. Furthermore, among the operations described below, such as the supply and stop of each type of gas, the opening and closing of each door, and the transport of the collection basket 40, operations which are automatically performable may be performed automatically via a control part (not illustrated) or may be performed manually by an operator.

First, in the production apparatus 2, carrier gas (for example, hydrogen gas) is supplied into the reaction furnace 21 together with raw material gas such as a carbon source, a catalyst metal, or a catalyst metal compound. Then, the reaction furnace 21 is heated by the heater 22 to produce CNTs. The CNTs thus produced are carried into the winding chamber 3 through the opening portion 31 together with the carrier gas. Then, in the winding chamber 3, the CNT wound body R is formed by the winding member 34 at the winding position, and thereafter, the inner peripheral surface of the CNT wound body R becomes unsupported by the winding member 34 as a result of withdrawing the winding member 34. Consequently, the CNT wound body R detaches from the winding member 34, and the CNT wound body R and the winding member 34 separate. Thereafter, the winding member 34 advances from the pull-out position to the winding position, and winding of CNTs for forming the next CNT wound body R begins.

Then, in the winding chamber 3, the CNT wound body R, separated and detached from the winding member 34, falls into the collection chamber 41 of the collection apparatus 4 disposed below the winding chamber 3, and is collected by falling into the collection basket 40 previously installed in the collection chamber 41. In this way, by repeatedly performing the winding and separation of CNTs in the upper winding chamber 3, the CNT wound bodies R are sequentially collected into the collection basket 40 installed in the collection chamber 41. Note that, at the stage where the CNT wound bodies R are being collected into the collection basket 40 installed in the collection chamber 41 in this manner, the entry-side door 46 provided between the collection chamber 41 and the carry-in chamber 42 and the exit-side door 50 provided between the collection chamber 41 and the carry-out chamber 43 are both lowered, and the atmosphere between the collection chamber 41 and the carry-in chamber 42 and the atmosphere between the collection chamber 41 and the carry-out chamber 43 are both sealed off.

Then, after the collection of the CNT wound bodies R into the collection basket 40 installed in the collection chamber 41 is performed for a predetermined time, or when a certain amount of the CNT wound bodies R has been collected into the collection basket 40 installed in the collection chamber 41, the exit-side door 50 provided between the collection chamber 41 and the carry-out chamber 43 is raised, and the collection chamber 41 and the carry-out chamber 43 are in a communicating state. Note that before the collection chamber 41 and the carry-out chamber 43 are brought into the communicating state in this manner, the purge gas is supplied into the carry-out chamber 43 from the supply port 68 provided in the upper portion of the carry-out chamber 43, the atmosphere in the carry-out chamber 43 is exhausted from the exhaust port 69 provided in the bottom portion of the carry-out chamber 43, and the inside of the carry-out chamber 43 is maintained in an inert atmosphere.

Then, the collection basket 40 containing the CNT wound bodies R is carried out of the collection chamber 41 and carried into the carry-out chamber 43 maintained in the inert atmosphere. Then, in the carry-out chamber 43, the pressing plate 71 descends into the collection basket 40 by the operation of the compression mechanism 70, and the CNT wound bodies R are compressed.

Thus, after the CNT wound bodies R are compressed, the collection basket 40 is returned from the carry-out chamber 43 to the collection chamber 41 again. Then, the CNT wound bodies R fallen from the winding chamber 3 are further collected into the collection basket 40 returned to the collection chamber 41.

Thus, when a predetermined amount of the CNT wound bodies R has been collected in the collection basket 40 by appropriately repeating the collection of the CNT wound bodies R into the collection basket 40 in the collection chamber 41 and the compression of the CNT wound bodies R in the carry-out chamber 43, the collection of the CNT wound bodies R into the collection basket 40 is completed.

Thereafter, in the carry-out chamber 43, the outlet door 60 provided on the side surface opposite the collection chamber 41 is raised, allowing the carry-out chamber 43 to communicate with the outside. Note that before the carry-out chamber 43 communicates with the outside in this manner, the exit-side door 50 provided between the collection chamber 41 and the carry-out chamber 43 is lowered, and the atmosphere between the collection chamber 41 and the carry-out chamber 43 becomes sealed off. Further, at this time, the heater 22 (FIG. 1) of the production apparatus 2 remains active, and the atmospheric temperature within the reaction furnace 21 and the winding chamber 3 is maintained at a temperature suitable for producing CNTs.

Then, the collection basket 40, after the collection of the CNT wound bodies R is completed, is carried out of the carry-out chamber 43 and carried into the carry-out side stage 75 of the collection basket circulation mechanism 5. Then, at the carry-out side stage 75 of the collection basket circulation mechanism 5, the CNT wound bodies R are taken out from the collection basket 40, and the taken-out CNT wound bodies R are moved to a subsequent process as appropriate.

On the other hand, the collection basket 40, which has become empty after the CNT wound bodies R are taken out at the carry-out side stage 75 of the collection basket circulation mechanism 5, is passed to the transport path 77, and the collection basket 40 is transferred to the carry-in side stage 76 via the transport path 77.

Meanwhile, after the collection basket 40 in which collection of the CNT wound bodies R has been completed is transported from the collection chamber 41 to the carry-out chamber 43, the next empty collection basket 40 is carried into the collection chamber 41 from the carry-in chamber 42.

That is, when the collection basket 40, after the collection of the CNT wound bodies R is completed, is transported from the collection chamber 41 to the carry-out chamber 43, the entry-side door 46 provided between the collection chamber 41 and the carry-in chamber 42 is raised, and the collection chamber 41 and the carry-in chamber 42 are in a communicating state. Note that before the collection chamber 41 and the carry-in chamber 42 are brought into the communicating state in this manner, the purge gas is supplied into the carry-in chamber 42 from the supply port 66 provided in the upper portion of the carry-in chamber 42, the atmosphere in the carry-in chamber 42 is exhausted from the exhaust port 67 provided in the bottom portion of the carry-in chamber 42, and the inside of the carry-in chamber 42 is maintained in an inert atmosphere.

Then, the empty collection basket 40 is carried out of the carry-in chamber 42 maintained in the inert atmosphere and carried into the collection chamber 41. Thus, when the empty collection basket 40 is carried into the collection chamber 41, the entry-side door 46 provided between the collection chamber 41 and the carry-in chamber 42 is lowered, and the atmosphere between the collection chamber 41 and the carry-in chamber 42 is sealed off. Then, in the collection chamber 41, the CNT wound bodies R fallen from the winding chamber 3 are continuously collected into the collection basket 40.

Moreover, the next collection basket 40 is further carried into the carry-in chamber 42. That is, after the collection basket 40 is carried out of the carry-in chamber 42 to the collection chamber 41, the entry-side door 46 provided between the collection chamber 41 and the carry-in chamber 42 is lowered, and as a result, the atmosphere between the collection chamber 41 and the carry-in chamber 42 is sealed off, then in the carry-in chamber 42, the inlet door 55 provided on the side surface opposite the collection chamber 41 in the carry-in chamber 42 is raised, allowing the carry-in chamber 42 to communicate with the outside. Note that before the carry-in chamber 42 communicates with the outside in this manner, the purge gas is supplied into the carry-in chamber 42 from the supply port 66 provided in the upper portion of the carry-in chamber 42, and the atmosphere in the carry-in chamber 42 is exhausted from the exhaust port 67 provided in the bottom portion of the carry-in chamber 42, whereby the inside of the carry-in chamber 42 is maintained in an inert atmosphere.

Then, the next empty collection basket 40 is carried from the carry-in side stage 76 of the collection basket circulation mechanism 5 into the carry-in chamber 42

By continuously and repeatedly performing the aforementioned steps, it becomes possible to continuously perform the production of CNTs in the production apparatus 2, the winding and separation of CNTs in the winding chamber 3, and the collection of the CNT wound bodies R in the collection chamber 41.

In the CNT collection method of this embodiment described above, it is possible to omit a heating step or the like for CNT production, which was conventionally required after completion of the CNT collection work. As a result, the time from the completion of the CNT collection work to the restart of the CNT production can be shortened, and the time to the mass manufacturing of CNTs can be shortened.

### (Second Embodiment)

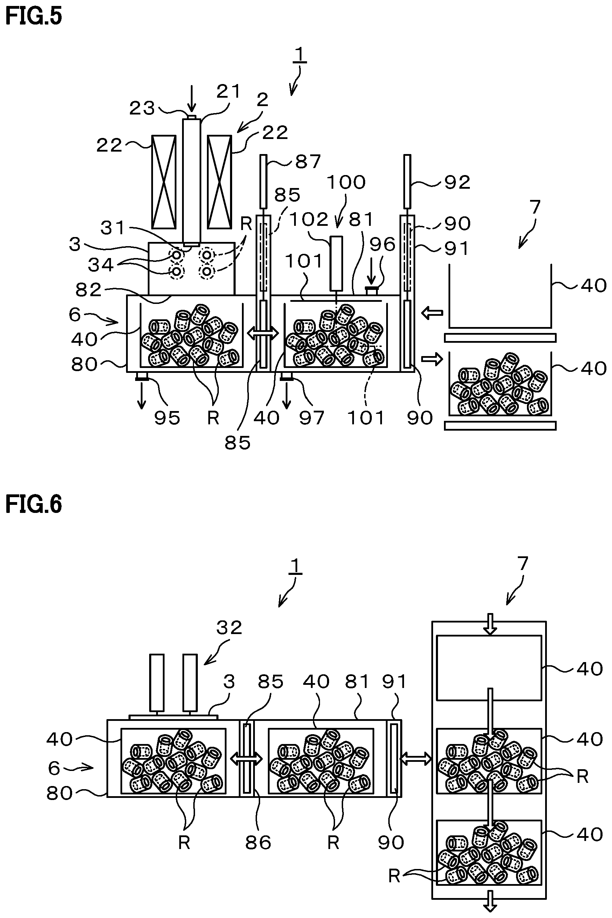

As illustrated in FIGS. 5 and 6, the CNT manufacturing apparatus 1 according to a second embodiment includes the production apparatus 2 for producing CNTs, the winding chamber 3 for winding the CNTs produced by the production apparatus 2 disposed below the CNT production apparatus 2, and a collection apparatus 6 for collecting the CNT wound body R wound in the winding chamber 3. Since the configurations of the production apparatus 2 and the winding chamber 3 are the same as those of the CNT manufacturing apparatus 1 according to the first embodiment described above, the description of the production apparatus 2 and the winding chamber 3 will be omitted.

### <Carbon Nanotube Collection Apparatus>

The collection apparatus 6 according to the second embodiment includes a collection chamber 80 for collecting carbon nanotubes in the form of the CNT wound body R into the collection basket 40, and a carry-in/out chamber 81 for carrying the empty collection basket 40 into the collection chamber 80 and carrying out the collection basket 40 containing the CNT wound body R (carbon nanotubes) collected in the collection chamber 80.

An opening portion 82 communicating with the winding chamber 3 is provided in the top surface portion of the collection chamber 80. The opening portion 82 has the shape through which the CNT wound body R formed in the winding chamber 3 can pass.

An entry/exit-side door 85 for sealing between the two chambers is provided between the collection chamber 80 and the carry-in/out chamber 81. The entry/exit-side door 85 is housed within a casing 86 to be vertically movable and is configured to be raised and lowered within the casing 86 by a raising and lowering mechanism 87, such as a cylinder device, provided above the casing 86. When the entry/exit-side door 85 is lowered due to an extension operation of the raising and lowering mechanism 87, as shown in FIG. 5 by the solid line, the atmosphere between the collection chamber 80 and the carry-in/out chamber 81 is sealed off. On the other hand, when the entry/exit-side door 85 is raised due to a contraction operation of the raising and lowering mechanism 87, as shown in FIG. 5 by the dash-dotted line, the collection chamber 80 and the carry-in/out chamber 81 are in a communicating state.

Further, in the carry-in/out chamber 81, an inlet/outlet door 90 for sealing between the outside and the carry-in/out chamber 81 is provided on the side surface opposite the collection chamber 80. The inlet/outlet door 90 is housed within a casing 91 to be vertically movable and is configured to be raised and lowered within the casing 91 by a raising and lowering mechanism 92, such as a cylinder device, provided above the casing 91. When the inlet/outlet door 90 is lowered due to an extension operation of the raising and lowering mechanism 92, as shown in FIG. 5 by the solid line, the atmosphere between the outside and the carry-in/out chamber 81 is sealed off. On the other hand, when the inlet/outlet door 90 is raised due to a contraction operation of the raising and lowering mechanism 92, as shown in FIG. 5 by the dash-dotted line, the outside and the carry-in/out chamber 81 are in a communicating state.

An exhaust port 95 for exhausting the atmosphere in the collection chamber 80 is provided in the bottom portion of the collection chamber 80. Gas supplied into the collection chamber 80 from the reaction furnace 21 and the winding chamber 3 is exhausted through the exhaust port 95. By using the above-mentioned mesh-shaped collection basket 40, the CNTs that have fallen without being wound by the winding member 34 can be collected from the gas exhausted from the exhaust port 95 of the collection chamber 80, resulting in improved exhaust gas cleanliness, enabling an environmentally conscious operation.

A supply port 96 for purge gas such as incombustible gas is provided in the upper portion of the carry-in/out chamber 81. An exhaust port 97 for exhausting the atmosphere in the carry-in/out chamber 81 is provided in the bottom portion of the carry-in/out chamber 81. By supplying the purge gas into the carry-in/out chamber 81 from the supply port 96 and exhausting the gas from the exhaust port 97, the inside of the carry-in/out chamber 81 can be maintained in an inert atmosphere.

The carry-in/out chamber 81 is provided with a compression mechanism 100 for compressing CNTs. The compression mechanism 100 includes a pressing plate 101 serving as a pressing member and a driver 102 connected to the pressing plate 101.

The pressing plate 101 has a size capable of being inserted into the collection basket 40 and is configured to be vertically movable by the driver 102. In other words, within the carry-in/out chamber 81, the pressing plate 101 is capable of moving up and down between a position where the pressing plate 101 descends into the collection basket 40 to compress the CNT wound bodies R (descended position), and a position where the pressing plate 101 moves above the collection basket 40 (withdrawn position), as shown in FIG. 5 by the dash-dotted line.

The collection apparatus 6 includes a collection basket circulation mechanism 7 for taking out the CNT wound bodies R from the collection basket 40 that has collected the CNT wound bodies R and been carried out of the carry-in/out chamber 81, and carrying the empty collection basket 40 into the carry-in/out chamber 81.

The CNT manufacturing apparatus 1 according to this embodiment is configured as described above. Incidentally the material of each member constituting the CNT manufacturing apparatus 1 is not particularly limited as long as the material does not inhibit the exertion of the functions and effects described in this specification; however, for example, stainless steel or rolled steel for general structure (SS material) is employed. Further, among the members constituting the CNT manufacturing apparatus 1, members with which the CNTs may come into contact may be provided with a Teflon (registered trademark) coating.

### (Carbon Nanotube Collection Method)

Next, an example of a CNT collection method using the collection apparatus 4 will be described. Note that, among operations such as supply and stop of each type of gas, opening and closing of each door, and transport of the collection basket 40 described below, operations which are automatically performable may be performed automatically via a control part (not shown) or may be performed manually by an operator.

First, in the production apparatus 2, carrier gas (for example, hydrogen gas) is supplied into the reaction furnace 21 together with raw material gas such as a carbon source, a catalyst metal, or a catalyst metal compound. Then, the reaction furnace 21 is heated by the heater 22 to produce CNTs. The CNTs thus produced are carried into the winding chamber 3 through the opening portion 31 together with the carrier gas. Then, in the winding chamber 3, the CNT wound body R is formed by the winding member 34 at the winding position, and thereafter, the inner peripheral surface of the CNT wound body R becomes unsupported by the winding member 34 as a result of withdrawing the winding member 34. Consequently, the CNT wound body R detaches from the winding member 34, and the CNT wound body R and the winding member 34 separate. Thereafter, the winding member 34 advances from the pull-out position to the winding position, and winding of the CNTs for forming the next CNT wound body R begins.

Then, in the winding chamber 3, the CNT wound body R, separated and detached from the winding member 34, falls into the collection chamber 80 of the collection apparatus 6 disposed below the winding chamber 3, and is collected by falling into the collection basket 40 previously installed in the collection chamber 80. In this way, by repeatedly performing the winding and separation of CNTs in the upper winding chamber 3, the CNT wound bodies R are sequentially collected into the collection basket 40 installed in the collection chamber 80. Note that, at the stage where the CNT wound bodies R are being collected into the collection basket 40 installed in the collection chamber 80 in this manner, the entry/exit-side door 85 provided between the collection chamber 80 and the carry-in/out chamber 81 is lowered, and the atmosphere between the collection chamber 80 and the carry-in/out chamber 81 is sealed off.

Then, after the collection of the CNT wound bodies R into the collection basket 40 installed in the collection chamber 80 is performed for a predetermined time, or when a certain amount of the CNT wound bodies R has been collected into the collection basket 40 installed in the collection chamber 80, the entry/exit-side door 85 provided between the collection chamber 80 and the carry-in/out chamber 81 is raised, and the collection chamber 80 and the carry-in/out chamber 81 are in a communicating state. Note that before the collection chamber 80 and the carry-in/out chamber 81 are brought into the communicating state in this manner, purge gas is supplied into the carry-in/out chamber 81 from the supply port 96 provided in the upper portion of the carry-in/out chamber 81, and the atmosphere in the carry-in/out chamber 81 is exhausted from the exhaust port 97 provided in the bottom portion of the carry-in/out chamber 81, whereby the inside of the carry-in/out chamber 81 is maintained in an inert atmosphere.

Then, the collection basket 40 containing the CNT wound bodies R is carried out of the collection chamber 80 and carried into the carry-in/out chamber 81 maintained in the inert atmosphere. Then, in the carry-in/out chamber 81, the pressing plate 101 descends into the collection basket 40 by the operation of the compression mechanism 100, and the CNT wound bodies R are compressed.

Thus, after the CNT wound bodies R are compressed, the collection basket 40 is returned from the carry-in/out chamber 81 to the collection chamber 80 again. Then, the CNT wound bodies R fallen from the winding chamber 3 are further collected into the collection basket 40 returned to the collection chamber 80.

Thus, when a predetermined amount of the CNT wound bodies R has been collected in the collection basket 40 by appropriately repeating the collection of the CNT wound bodies R into the collection basket 40 in the collection chamber 80 and the compression of the CNT wound bodies R in the carry-in/out chamber 81, the collection of the CNT wound bodies R into the collection basket 40 is completed.

Thereafter, in the carry-in/out chamber 81, the inlet/outlet door 90 provided on the side surface opposite the collection chamber 80 is raised, allowing the carry-in/out chamber 81 to communicate with the outside. Note that before the carry-in/out chamber 81 communicates with the outside in this manner, the entry/exit-side door 85 provided between the collection chamber 80 and the carry-in/out chamber 81 is lowered, and the atmosphere between the collection chamber 80 and the carry-in/out chamber 81 is sealed off. Further, at this time, the heater 22 of the production apparatus 2 remains active, and the atmospheric temperature within the reaction furnace 21 and the winding chamber 3 is maintained at a temperature suitable for producing CNTs.

Then, the collection basket 40, after the collection of the CNT wound bodies R is completed, is carried out of the carry-in/out chamber 81 and carried into the collection basket circulation mechanism 7. Then, in the collection basket circulation mechanism 7, the CNT wound bodies R are taken out from the collection basket 40, and the taken-out CNT wound bodies R are moved to a subsequent process as appropriate.

On the other hand, the collection basket 40, which has become empty after the CNT wound bodies R are taken out in the collection basket circulation mechanism 7, is returned from the collection basket circulation mechanism 7 to the carry-in/out chamber 81. In this case, by preparing another empty collection basket 40 in advance in the collection basket circulation mechanism 7, the empty collection basket 40 can be returned from the collection basket circulation mechanism 7 to the carry-in/out chamber 81 concurrently with the collection basket 40, after the collection of the CNT wound bodies R is completed, being carried out of the carry-in/out chamber 81 and carried into the collection basket circulation mechanism 7.

Thus, after the empty collection basket 40 is returned from the collection basket circulation mechanism 7 to the carry-in/out chamber 81, the inlet/outlet door 90 provided on the side surface opposite the collection chamber 80 is lowered in the carry-in/out chamber 81, and the carry-in/out chamber 81 is sealed off from the outside. Then, purge gas is supplied into the carry-in/out chamber 81 from the supply port 96 provided in the upper portion of the carry-in/out chamber 81, and the atmosphere in the carry-in/out chamber 81 is exhausted from the exhaust port 97 provided in the bottom portion of the carry-in/out chamber 81, whereby the inside of the carry-in/out chamber 81 is maintained in an inert atmosphere.

Then, the empty collection basket 40 is carried out of the carry-in/out chamber 81 maintained in the inert atmosphere and is carried into the collection chamber 80. In this manner, when the empty collection basket 40 is carried into the collection chamber 80, the entry/exit-side door 85 provided between the collection chamber 41 and the carry-in/out chamber 81 is lowered, and the atmosphere between the collection chamber 80 and the carry-in/out chamber 81 is sealed off. Then, in the collection chamber 80, the CNT wound bodies R fallen from the winding chamber 3 are continuously collected into the collection basket 40.

By continuously and repeatedly performing the aforementioned steps, it becomes possible to continuously perform the production of CNTs in the production apparatus 2, the winding and separation of CNTs in the winding chamber 3, and the collection of the CNT wound bodies R in the collection chamber 80.

Here, the effects of the CNT collection method described in the above embodiment will be described. For example, when a CNT production rate is 25 g/hour and a volume of a collection container is 0.5 m³ as CNT manufacturing conditions and the CNT collection method described in the above embodiment is not used, the collection container becomes full 15 hours after starting CNT manufacturing. The operations for taking out the collection container filled with CNTs and the time required therefore are as follows. First, approximately 10 hours are required for furnace cooling of a heating chamber. Gas purging of a collection chamber can proceed simultaneously during this furnace cooling. Next, approximately 2 hours are required for taking out CNT wound bodies from the collection chamber, and approximately 2 hours are required for replacing reaction tubes and cleaning the collection chamber. From this point, approximately 10 hours are required for heating the heating chamber for the next CNT production, and approximately 1 hour is required for gas introduction and stabilization of the atmosphere in the furnace, thereby completing preparation for charging raw materials for the next reaction. That is, it takes approximately 25 hours from the completion of a CNT production reaction until the next CNT production reaction can be started. By using the CNT collection mechanism described in the above embodiment, the aforementioned facility downtime of approximately 25 hours is eliminated.

Further, although differences exist based on production conditions, equipment scale, and other similar factors, the CNT compression mechanism described in the above embodiment can improve the bulk density of the CNT wound body by 1.4 to 5 times (from approximately 0.5 kg/m³ for the wound body to approximately 0.7 to 2.5 kg/m³ for the compressed body), and, consequently, the amount collected per a collection basket will also necessarily increase.

In the CNT collection method of this embodiment as described above, it is possible to omit a heating process and other related processes for producing CNTs that were conventionally required after completion of the CNT collection operation. As a result, the turnaround time from the completion of the CNT collection operation to the restart of CNT production can be shortened, and the operating rate of CNT mass manufacturing can be improved.

Although the embodiments of the present invention have been explained above, the present invention is not limited to such examples. It should be understood that various changes or modifications are readily apparent to those skilled in the art within the scope of the invention as defined by the claims, and those various changes or modifications naturally fall within the scope of the present invention.

Note that although the use of the compression mechanisms 70 and 100 is not essential, the use of the above-described compression mechanisms 70 and 100 increases the capacity within the collection basket 40 for the CNT wound bodies R, allowing the production of CNTs to be continued. Therefore, the collection amount of CNTs per CNT collection operation increases, and the frequency of the CNT collection process can be reduced, thus ensuring a longer CNT production time.

Specifically, since CNTs are lightweight, they do not collapse under their own weight. Furthermore, due to the inherent properties of CNTs, the CNT wound bodies R do not readily roll on the surfaces of other CNT wound bodies R, and the CNTs stored in the collection basket 40 tend to be bulky. Therefore, it is advantageous to provide the compression mechanism 70.

Further, the effects described in the present specification are merely illustrative or exemplary and are not limited. That is, the technology according to the present disclosure can exhibit other effects that are obvious to those skilled in the art from the description of this specification, in addition to or instead of the above effects. Although the example in which the carbon nanotubes are collected as CNT wound bodies R has been described above, the present invention is applicable even when the carbon nanotubes are collected in other forms.

### INDUSTRIAL APPLICABILITY

The present invention can be applied to collection apparatuses and manufacturing apparatuses for carbon nanotubes.

### EXPLANATION OF CODES

- R: CNT wound body (carbon nanotube wound body)
- 1: CNT manufacturing apparatus (carbon nanotube manufacturing apparatus)
- 2: CNT production apparatus (carbon nanotube production apparatus)
- 3: winding chamber
- 4, 6: CNT collection apparatus (carbon nanotube collection apparatus)
- 5, 7: collection basket circulation mechanism
- 21: reaction furnace
- 22: heater
- 23: raw material supply port
- 31: opening portion
- 32: winding mechanism
- 33: rotation shaft
- 34: winding member
- 35: driver
- 36: separation mechanism
- 37: cylinder mechanism
- 40: collection basket
- 41: collection chamber
- 42: carry-in chamber
- 43: carry-out chamber
- 45: opening portion
- 46: entry-side door
- 47: casing
- 48: raising and lowering mechanism
- 50: exit-side door
- 51: casing
- 52: raising and lowering mechanism
- 55: inlet door
- 56: casing
- 57: raising and lowering mechanism
- 60: outlet door
- 61: casing
- 62: raising and lowering mechanism
- 65: exhaust port
- 66: supply port
- 67: exhaust port
- 68: supply port
- 69: exhaust port
- 70: compression mechanism
- 71: pressing plate
- 72: driver
- 75: carry-out side stage
- 76: carry-in side stage
- 77: transport path
- 80: collection chamber
- 81: carry-in/out chamber
- 82: opening portion
- 85: entry/exit-side door
- 86: casing
- 87: raising and lowering mechanism
- 90: inlet/outlet door
- 91: casing
- 92: raising and lowering mechanism
- 95: exhaust port
- 96: supply port
- 97: exhaust port
- 100: compression mechanism
- 101: pressing plate
- 102: driver

## Claims

1. A carbon nanotube collection apparatus that collects carbon nanotubes produced by a carbon nanotube production apparatus, the carbon nanotube collection apparatus comprising:
a collection chamber configured to collect the carbon nanotubes into a collection basket;
a carry-in chamber configured to carry an empty collection basket into the collection chamber;
a carry-out chamber configured to carry the collection basket that has collected the carbon nanotubes out of the collection chamber;
an entry-side door configured to seal between the collection chamber and the carry-in chamber; and
an exit-side door configured to seal between the collection chamber and the carry-out chamber.

2. The carbon nanotube collection apparatus according to claim 1, further comprising a compression mechanism in the carry-out chamber configured to compress the carbon nanotubes collected into the collection basket.

3. The carbon nanotube collection apparatus according to claim 1, further comprising a collection basket circulation mechanism configured to take out the carbon nanotubes from the collection basket that has collected the carbon nanotubes and been carried out of the carry-out chamber and to carry the empty collection basket into the carry-in chamber.

4. The carbon nanotube collection apparatus according to claim 3, further comprising a transport mechanism configured to transport the collection basket among the collection chamber, the carry-in chamber, the carry-out chamber, and the circulation mechanism.

5. A carbon nanotube collection apparatus that collects carbon nanotubes produced by a carbon nanotube production apparatus, the carbon nanotube collection apparatus comprising:
a collection chamber configured to collect the carbon nanotubes into a collection basket;
a carry-in/out chamber configured to carry an empty collection basket into the collection chamber and to carry the collection basket that has collected the carbon nanotubes out of the collection chamber; and
an entry/exit-side door configured to seal between the collection chamber and the carry-in/out chamber.

6. The carbon nanotube collection apparatus according to claim 5, further comprising a compression mechanism in the carry-in/out chamber configured to compress the carbon nanotubes collected into the collection basket.

7. The carbon nanotube collection apparatus according to claim 5, further comprising a collection basket circulation mechanism configured to take out the carbon nanotubes from the collection basket that has collected the carbon nanotubes and been carried out of the carry-in/out chamber, and to carry the empty collection basket into the carry-in/out chamber.

8. The carbon nanotube collection apparatus according to claim 7, further comprising a transport mechanism configured to transport the collection basket among the collection chamber, the carry-in/out chamber, and the circulation mechanism.

9. A carbon nanotube manufacturing apparatus, comprising:
a production apparatus configured to produce carbon nanotubes; and
the carbon nanotube collection apparatus according to any one of claims 1 to 8.

10. A carbon nanotube collection method for collecting carbon nanotubes using the carbon nanotube collection apparatus according to claim 2, the method comprising:
repeatedly performing an operation of collecting the carbon nanotubes into a collection basket in the collection chamber and an operation of compressing the carbon nanotubes collected in the collection basket in the carry-out chamber.

11. A carbon nanotube collection method for collecting carbon nanotubes using the carbon nanotube collection apparatus according to claim 6, the method comprising:
repeatedly performing an operation of collecting the carbon nanotubes into a collection basket in the collection chamber and an operation of compressing the carbon nanotubes collected in the collection basket in the carry-in/out chamber.
